# EUROPEAN PATENT SPECIFICATION

(11) **EP 1 630 442 B1**
(45) Date of publication and mention of the grant of the patent: **17.11.2010**
(21) Application number: 05017306.1
(22) Date of filing: 09.08.2005
(51) Int. Cl.: F16D 48/06

(54) **Clutch control device**
Kupplungssteuerungsvorrichtung
Dispositif de commande d'embrayage

(30) Priority: 25.08.2004 JP 2004245881
(43) Date of publication of application: 01.03.2006
(73) Proprietor: AISIN SEIKI KABUSHIKI KAISHA, Kariya-shi, Aichi-ken 448-8650 (JP)
(72) Inventor: Tamaru, Daisuke, Kariya-shi Aichi-ken 48-8650 (JP); Terakawa, Tomomitsu, Kariya-shi Aichi-ken 48-8650 (JP)
(74) Representative: Kramer - Barske - Schmidtchen

(56) References cited:
- EP-A- 1 416 182
- DE-A1- 4 124 722
- FR-A- 2 854 848

## Description

### FIELD OF THE INVENTION

This invention relates to a clutch control device for changing an engaging stage between a clutch disc and a flywheel by controlling actuation of an actuator. More particularly, the present invention pertains to a clutch control device, which responds a change of an actual clutch stroke due to a fluctuation of a thermal expansion of the clutch disc.

### BACKGROUND

Conventionally, a system is known which automatically performs a series of gear ratio change operations (i.e., a clutch engaging or disengaging operation, a gear shift operation, and a gear select operation) by assembling an actuator to a conventional manual transmission. The series of gear ratio change operations is performed by driver's intention or vehicle driving conditions. Taking a clutch control operation as an example, the system controls a torque (i.e., a clutch torque) transmitted between a flywheel and a clutch disc by controlling actuation of a clutch actuator. An optimal clutch operation can be hence performed in response to the vehicle driving conditions by controlling the clutch torque using the actuator. According to the aforementioned clutch control operation, the actuator controls pressure load on the flywheel applied from the clutch disc and the clutch torque is thereby controlled.

The clutch control device is described in JP2004-150513A, which focuses on temperature dependency of a friction coefficient µ of the clutch disc and corrects a control amount of the actuator on the basis of a fluctuation of the friction coefficient in response to a detected clutch disc temperature.

However, an increase of the clutch disc temperature brings not only the fluctuation of the friction coefficient *µ* of the clutch disc, but also a thermal expansion of the clutch disc. Accordingly, it is necessary to respond a change of a clutch stroke (i.e., an actual clutch stroke) due to a fluctuation of the thermal expansion of the clutch disc.

For example, the actual clutch stroke (a control amount [mm] between the clutch disc and the flywheel) is assumed to change by 0.5mm in consequence of an influence due to the increase of the clutch disc temperature. At this time, a change amount of the clutch torque relative to a gap of ΔS₂=0.5mm becomes a gap of ΔT₂=15Nm in a B area while the change amount of the clutch torque relative to a gap of ΔS₁=0.5mm is a gap of ΔT₁=5Nm in an A area as shown in Fig. 10. According to the invention described in JP2004-150513A, the control device performs a multiple correction of the clutch torque. It is also necessary to respond the change of the actual clutch stroke due to the fluctuation of the thermal expansion of the clutch disc in a whole area where nonlinearity being indicated in a characteristic between the clutch stroke and the clutch torque.

A need thus exists for the clutch control device configured to respond the change of the clutch stroke (i.e., the actual clutch stroke) due to the fluctuation of the thermal expansion of the clutch disc.

EP 1 416 182 A2 discloses a clutch control device according to the preamble of claim 1.

### SUMMARY OF THE INVENTION

The above problem is solved by the clutch control device of claim 1.

According to the present invention, the optimal clutch torque feedback operation can be performed since the target clutch torque (i.e., the target clutch stroke) is corrected to absorb the influence due to the fluctuation of the friction coefficient *µ* and the thermal expansion of the clutch disc on the basis of the clutch temperature.

### BRIEF DESCRIPTION OF THE DRAWINGS

The foregoing and additional features and characteristics of the present invention will become more apparent from the following detailed description considered with reference to the accompanying drawings, wherein:

Fig. 1 is a block diagram showing a structure of a vehicle control system applied to a clutch control device according to a first embodiment of the present invention.

Fig. 2 is a block diagram showing a structure of the clutch control device and peripheral devices of the clutch control device according to the first embodiment of the present invention.

Fig. 3 is a graph showing a basic relationship of a clutch torque relative to a moving amount of a rod (i.e., a clutch stroke) of the vehicle control system applied to the clutch control device according to the first embodiment of the present invention.

Fig. 4 is a flow chart showing a control condition of the clutch control device according to the first embodiment of the present invention.

Fig. 5 is a graph showing a relationship between a clutch temperature and a friction coefficient *µ* of the vehicle control system applied to the clutch control device according to the first embodiment of the present invention.

Fig. 6 is a graph showing a relationship between a target clutch torque and a target clutch stroke of the clutch control device before and after a first correction according to the first embodiment of the present invention.

Fig. 7 is a graph showing a characteristic map related to the target clutch torque and a first correction target clutch stroke rate of the clutch control device according to the first embodiment of the present invention.

Fig. 8 is a graph showing a relationship between the target clutch torque and the target clutch stroke of the clutch control device before and after a second correction according to the first embodiment of the present invention.

Fig. 9 is a graph showing a characteristic map related to the target clutch torque and the first correction target clutch stroke rate of the clutch control device before and after a third correction according to the first embodiment of the present invention.

Fig. 10 is a graph showing a relationship between the target clutch torque and the target clutch stroke for explaining an operation of a conventional clutch control device.

### DETAILED DESCRIPTION

A clutch control device according to a first embodiment of the present invention will be explained with reference to illustrations of drawings as follows.

According to the vehicle control system of the present invention, an automatic clutch 20 is assembled to a flywheel 10a which is configured to rotate integrally with an output shaft (i.e., a crank shaft) of an engine 10 (i.e., an internal combustion engine). An automatic manual transmission 30 (i.e., a transmission) is connected to the flywheel 10a through the automatic clutch 20.

The engine 10 is provided with an ignition switch 11 for an ignition, an engine rotational speed sensor 16 for detecting an engine rotational speed Ne, and an engine water temperature sensor 17 for detecting engine water temperature Tw.

The automatic clutch 20 includes a mechanical (i.e., dry type - single) friction clutch 21, a clutch lever 22, and a clutch actuator 23 which is configured to control a rotational transmission of the friction clutch 21 through the clutch lever 22.

The friction clutch 21 includes a clutch disc 21a which is disposed facing the flywheel 10a and is integrally rotatable with an input shaft 31 of the automatic manual transmission 30. When the pressure load of the clutch disc 21a relative to the flywheel 10a varies, rotational transmission (i.e., a clutch torque) between the flywheel 10a and the clutch disc 21a (between the output shaft of the engine 10 and the input shaft 31 of the automatic manual transmission 30) varies in response to the change of the pressure load.

The clutch actuator 23 is provided with a direct current electric motor 24 (i.e., an electric motor) serving as a driving power source. The clutch lever 22 varies its position in response to forward or rearward movement of a rod 25 operated by the motor 24. A diaphragm spring 28 is resiliently attached to a release bearing 27 and distorted by the release bearing 27 operated by the clutch lever 22. A pressure plate 29 is applied with a pressure load from the distorted diaphragm spring 28. The pressure plate 29 is supported by a clutch cover 21b of the friction clutch 21 which is integrally rotatable with the flywheel 10a. When the clutch lever 22 varies its position in response to the stroke of the rod 25 operated by the clutch actuator 23, the pressure load of the clutch disc 21a relative to the flywheel 10a is changed through the pressure plate 29, and the rotational transmission is thereby controlled.

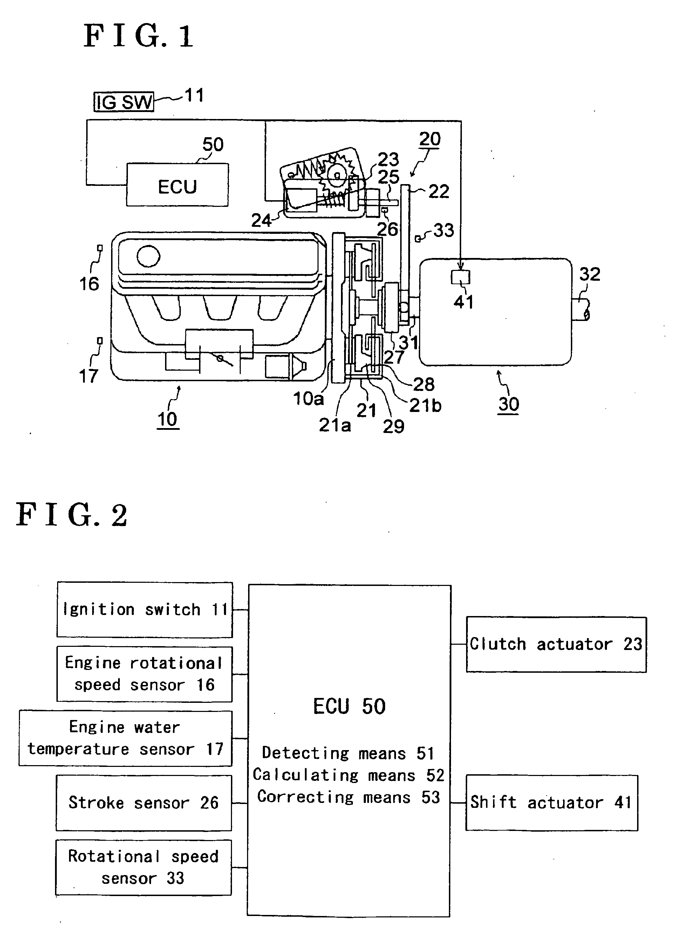

More particularly, when the rod 25 is moved forward, the clutch lever 22 is operated in a clockwise direction in Fig. 1. In this case, the pressure load of the clutch disc 21a relative to the flywheel 10a is reduced. On the other hand, when the rod 25 is moved rearward, the clutch lever 22 is operated in a counterclockwise direction in Fig. 1 to an original position. In this case, the pressure load of the clutch disc 21a relative to the flywheel 10a is increased.

A relationship between a moved position of the rod 25 and the rotational transmission by the friction clutch 21 is explained as follows. When the rod 25 is moved forward, the pressure load of the clutch disc 21a relative to the flywheel 10a will eventually become approximately zero. On this occasion, the clutch disc 21a is disconnected with the flywheel 10a and there is no rotational transmission between the flywheel 10a and the clutch disc 21a. This state of the friction clutch 21 refers to as a clutch disengaged condition and the position of the rod 25 at this time refers to as a standby position. The moving amount relative to the position of the rod 25 refers to as a clutch stroke as a control amount.

When the rod 25 is moved rearward from the standby position, the pressure load of the clutch disc 21a relative to the flywheel 10a increases in response to a moving amount of the rod 25. At this time, the rotational transmission between the flywheel 10a and the clutch disc 21a is performed with rotational speed difference (slip amount) in response to the pressure load. When the difference between the rotational speed (i.e., a slip amount) eventually become approximately zero in response to an increase of the pressure load by the rearward movement of the rod 25, the flywheel 10a is rotated in synchronization with the clutch disc 21a. The synchronized rotation of the flywheel 10a and the clutch disc 21a refers to as a clutch fully engaged condition. The position of the rod 25 at this time refers to as a clutch fully engaged position. Accordingly, the clutch actuator 23 controls the slip amount between the flywheel 10a and the clutch disc 21a by controlling the moving amount (i.e., the clutch stroke) of the rod 25 between the standby position and the moving position of the synchronized rotation (i.e., a clutch fully engaged position). A condition where the flywheel 10a and the clutch disc 21a slips when the moving amount (i.e., the clutch stroke) of the rod 25 being part way between the standby position and the fully engaged position refers to as a clutch half-engaged condition. Both the clutch fully engaged condition and the clutch half-engaged condition mean clutch engaged conditions.

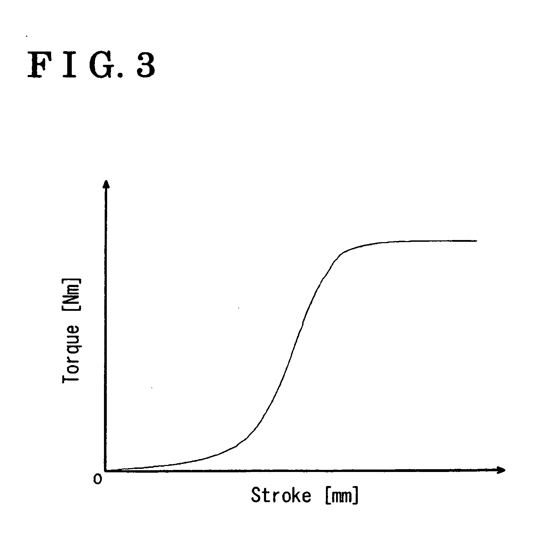

Referring to Fig. 3, a zero point of the clutch stroke corresponds to the standby position. The clutch stroke at the positive side of the zero point (i.e., the standby position) corresponds to the moving amount of the rod 25 in the direction of the clutch fully engaged position. The clutch torque can be transmitted from the flywheel 10a to the clutch disc 21a. The clutch torque is increased in response to the movement of the rod 25 in the direction of the clutch fully engaged position with along to the increase of the clutch stroke. The vehicle can be, for example, smoothly started and accurately accelerated by controlling the clutch torque in response to vehicle driving conditions.

The automatic clutch 20 is provided with a stroke sensor 26 (i.e., a second detecting means) for detecting a clutch stroke St which represents a moving position of the rod 25 of the clutch actuator 23. The clutch stroke St serves for judging a condition of the rotational transmission through the friction clutch 21.

The automatic manual transmission 30 is a parallel axis type gear transmission which performs, for example, five forward shift stages and a single reverse shift stage. The automatic manual transmission 30 includes the input shaft 31, an output shaft 32, and plural gear trains. The input shaft 31 of the transmission 30 is operatively linked to the clutch disc 21a of the friction clutch 21 and the output shaft 32 of the transmission 30 is operatively linked to an axle (not shown). The input shaft 31 is provided with a rotational speed sensor 33 for detecting the rotational speed (i.e., an input shaft rotational speed Ni). The automatic manual transmission 30 is provided with a shift actuator 41 for changing gear trains (shift stages) capable of transmitting a driving power. The automatic manual transmission 30 selects desirable shift stages by means of the shift actuator 41.

The vehicle control system illustrated in FIG. 1 is provided with an electronic control unit (i.e., an ECU) 50. The ECU 50 includes a detecting means 51 (i.e., a first detecting means), a calculating means 52, and a correcting means 53 (i.e., a first correction means and a second correction means) as illustrated in Fig. 2. The detecting means 51 detects the vehicle driving conditions (i.e., a driving speed, the engine water temperature, the engine rotational speed, an input rotational speed, an engine torque, a clutch estimate temperature, and a clutch estimate torque, etc.) on the basis of detecting signals of the various sensors.
The calculating means 52 calculates numerical information (i.e., the clutch estimate torque, the clutch estimate temperature, a reference target clutch torque, a correction coefficient of the clutch torque temperature, a first correction target clutch torque, a first correction target clutch stroke rate, a first correction target clutch stroke, a corresponding correction amount of the thermal expansion, a second correction target clutch stroke, a back-calculated first correction target clutch stroke, a back-calculated first correction target clutch stroke rate, a back-calculated first correction target clutch torque, and a back-calculated reference target clutch torque, etc.) for the clutch control with reference to, for example, a database and a predetermined characteristic map on the basis of information of the vehicle driving conditions. The correcting means 53 corrects a control amount of the clutch actuator 23 on the basis of detected clutch temperature. More particularly, the correcting means 53 corrects the control amount of the clutch actuator 23 on the basis of the fluctuation of the friction coefficient *µ* and the thermal expansion of the clutch disc in response to the clutch temperature.

The ECU 50 includes main elements such as a well-known central processing unit (i.e., a CPU) with a microcomputer, a read-only-memory (i.e., a ROM) for memorizing various programs, characteristic maps, updated values of the fully engaged position and the standby position, a random-access-memory (i.e., a RAM) for reading out and writing down various data, and an electronically erasable and programmable read only memory (i.e., an EEPROM) for storing data without a back-up power source. The ECU 50 is connected with the ignition switch 11, various sensors including the engine rotational speed sensor 16, the engine water temperature sensor 17, the stroke sensor 26, and the rotational speed sensor 33, the clutch actuator 23, and the shift actuator 41. The ECU 50 receives the detecting signals of the various sensors so as to detect the vehicle driving conditions (i.e., an on/off condition of the ignition switch 11, the engine rotational speed Ne, the engine water temperature Tw, the clutch stroke St, the input shaft rotational speed Ni, etc.). The ECU 50 further operates the clutch actuator 23 and the shift actuator 41 on the basis of the vehicle driving conditions.

More particularly, the ECU 50 operates the clutch actuator 23 for adjusting the rotational transmission by the friction clutch 21. Therefore, the rotational transmission by the friction clutch 21 in response to the vehicle driving conditions can be automatically controlled.

Further, the ECU 50 operates the shift actuator 41 for selecting the gear trains (i.e., the shift stages) capable of transmitting the driving power in the transmission 30. Accordingly, the shift stages in the transmission 30 in response to the vehicle driving conditions can be automatically performed.

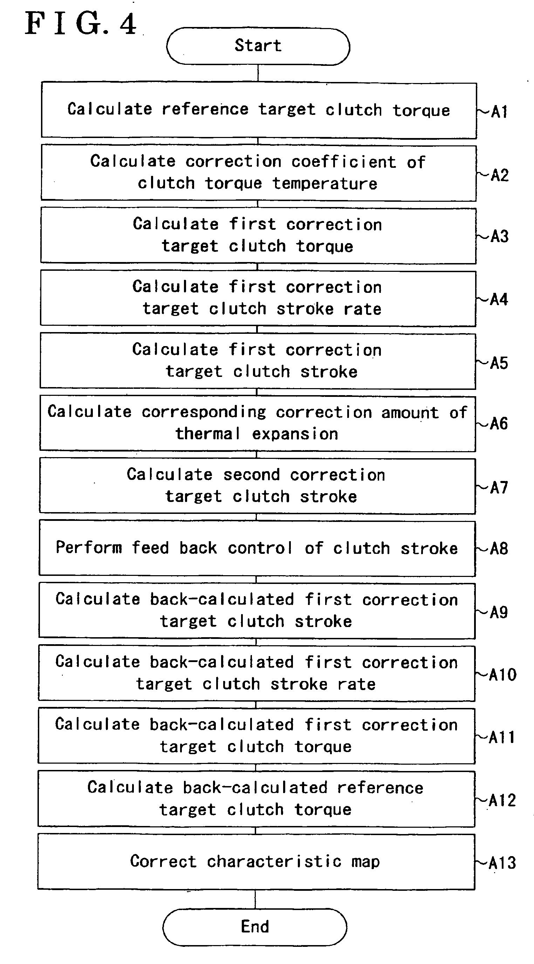

The clutch control system according to the first embodiment of the present invention is described with reference to illustrations of drawings as follows. As shown in Fig. 4, the clutch control calculations are repeatedly performed by a predetermined timing interruption whenever the ignition switch 11 is turned on.

In step A1, the ECU 50 calculates the reference target clutch torque. The ECU 50 calculates the reference target clutch torque which is suitable for the clutch control in response to the vehicle driving conditions on the basis of the detecting signals of the various sensors. The reference target clutch torque refers to as the target clutch torque which is calculated on the assumption that the clutch disc 21a being at a predetermined reference temperature and there being no fluctuation of the friction coefficient µ and the thermal expansion due to the temperature of the clutch disc 21a. Accordingly, the clutch estimate temperature is not considered in step A1. (The vehicle driving conditions in step A1 do not include the clutch estimate temperature).

In step A2, the ECU 50 calculates the correction coefficient of the clutch torque temperature with reference to a characteristic map relating to the clutch temperature and the correction coefficient of the clutch torque temperature on the basis of the detected (calculated) clutch estimate temperature (i.e., an estimate temperature of the clutch disc 21a). The clutch estimate temperature is calculated with reference to a predetermined characteristic map on the basis of, for example, the clutch estimate toque calculated on the basis of the engine torque and the engine rotational speed, the driving speed, the engine water temperature, the engine rotational speed, and the input rotational speed. The clutch stroke detected by the stroke sensor 26 is preferably not to be used as a parameter for the calculation of the clutch estimate temperature so as to avoid a circle consultation of the correction amount. The ECU 50 includes an initializing means. The parameter used in the calculation of the clutch estimate temperature is desirably initialized by a predetermine timing so as to improve stability of the estimate accuracy and capability of initial driving.

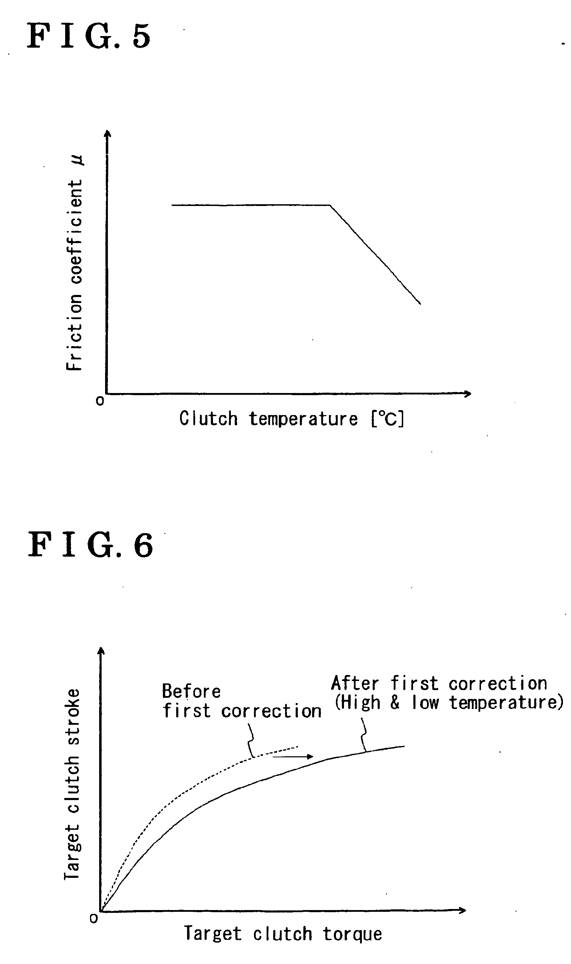

The correction coefficient of the clutch torque temperature is described as follows. Referring to Fig. 5, when the clutch temperature (i.e., the temperature of the clutch disc 21a) increases beyond a predetermined temperature, the friction coefficient µ is gradually decreased. On the other hand, the relationship of the clutch torque relative to the clutch stroke illustrated in Fig. 3 is assumed that there is no clutch temperature influence. In practice, the clutch torque is estimated by multiplying the clutch load by the friction coefficient µ while the clutch load is estimated on the basis of the clutch stroke. In other words, the relationship of the clutch torque relative to the clutch stroke shown in Fig. 3 is calculated on the assumption that the friction coefficient *µ* is constant. A correction coefficient of the clutch torque temperature absorbs the influences of the friction coefficient µ in the relationship of the clutch torque relative to the clutch stroke illustrated in Fig. 3. For example, when the friction coefficient *µ* is decreased because of an increase of the clutch temperature, the correction coefficient of the clutch torque temperature is calculated so as to increase the target clutch torque in consideration of a decrease of the clutch torque relative to the clutch stroke (i.e., clutch load). The correction coefficient of the clutch torque temperature does not consider the influence due to the thermal expansion of the clutch disc.

In step A3, the ECU 50 calculates the first correction target clutch torque on the basis of the calculated reference target clutch torque and the correction coefficient of the clutch torque temperature. The ECU 50 calculates the target clutch torque (i.e., the first correction target clutch torque) in light of the influence due to the fluctuation of the friction coefficient *µ* by multiplying the reference target clutch torque by the correction coefficient of the clutch torque temperature. Multiplication of the reference target clutch torque and the correction coefficient of the clutch torque temperature refers to as a first correction. A relationship between the target clutch torque and the target clutch stroke before and after the first correction is illustrated in Fig. 6.

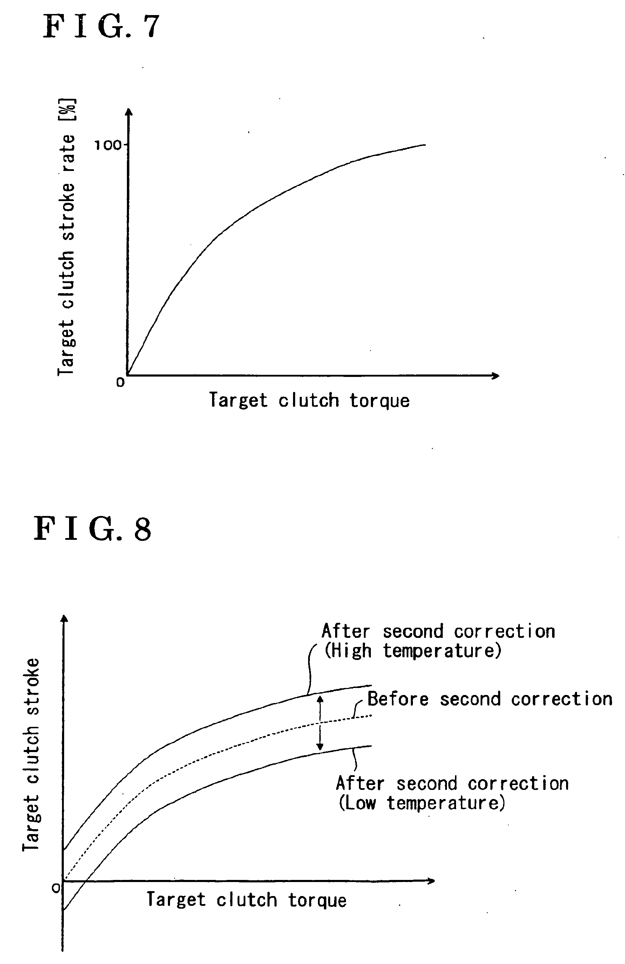

In step A4, the ECU 50 calculates the first correction target clutch stroke rate with reference to a characteristic map related to the target clutch torque and the target clutch stroke rate on the basis of the first correction target clutch torque calculated in step A3. The first correction target clutch stroke rate refers to as a ratio of the target clutch stroke in a condition where the clutch stroke of the standby position is assumed to be zero percent and the clutch stroke of the fully engaged position is assumed to be one hundred percent when the correction due to the fluctuation of the friction coefficient *µ* being made. An example of the characteristic map related to the target clutch torque and the target clutch stroke rate is illustrated in Fig. 7.

In step A5, the ECU 50 calculates the first correction target clutch stroke with reference to a position information related to the fully engaged position and the standby position on the basis of the first correction target clutch stroke rate calculated in step A4. The first correction target clutch stroke is calculated by multiplying the difference between the fully engaged position and the standby position by the first correction target clutch stroke rate. The updated values of the fully engaged position and the standby position, which is obtained in a condition where the correction due to the wear of the clutch disc being made, is used for the position information related to the fully engaged position and the standby position.

In step A6, the ECU 50 calculates the corresponding correction amount of the thermal expansion with reference to a characteristic map related to the clutch temperature and the correction amount on the basis of the detected (calculated) clutch estimate temperature. The corresponding correction amount of the thermal expansion refers to as a fluctuation amount of the thermal expansion of the clutch disc 21a due to an increase of the clutch disc temperature in a condition where the temperature of the clutch disc 21a being higher than a predetermined reference temperature. The corresponding correction amount of the thermal expansion refers to as a fluctuation amount of thermal contraction of the clutch disc 21a due to a decrease of the clutch disc temperature in a condition where the temperature of the clutch disc 21a being lower than a predetermined reference temperature. The clutch estimate temperature used in step A6 is same as which used in step A2. The corresponding correction amount of the thermal expansion is indicated as a positive value when the clutch disc 21a is thermally expanded, meanwhile, the corresponding correction amount of the thermal expansion is indicated as a negative value when the clutch disc 21a is thermally contracted.

In step A7, the ECU 50 calculates the second correction target clutch stroke on the basis of the first correction target clutch stroke calculated in step A5 and the corresponding correction amount of the thermal expansion calculated in step A6. The second correction target clutch stroke refers to as the clutch stroke in light of the influence due to the fluctuation of the friction coefficient *µ* and the thermal expansion. The second correction target clutch stroke is calculated by adding the corresponding correction amount of the thermal expansion to the first correction target clutch stroke. An addition of the first correction target clutch stroke and the corresponding correction amount of the thermal expansion refers to as a second correction. A relationship between the target clutch torque and the target clutch stroke before and after the second correction is illustrated in Fig. 8. The target clutch stroke shifts upward in Fig. 8 when the clutch temperature is higher than the reference temperature and the clutch disc is thermally expanded. The target clutch stroke shifts downward in Fig. 8 when the clutch temperature is lower than the reference temperature and the clutch disc is thermally contracted.

In step A8, the ECU 50 performs a feed back operation so as to make the clutch stroke St detected by the stroke sensor 26 substantially match with the second correction target clutch stroke calculated in step A7. Accordingly, the clutch control system is achieved which absorbs the influence due to the fluctuation of the friction coefficient µ and the thermal expansion of the clutch disc.

In step A9, the ECU 50 calculates the back-calculated first correction target clutch stroke on the basis of the detected clutch stroke St and the calculated corresponding correction amount of the thermal expansion. The back-calculated first correction target clutch stroke is calculated by calculating back the first correction target clutch stroke on the basis of the clutch stroke St and the corresponding correction amount of the thermal expansion. That is, the back-calculated first correction target is calculated by subtracting the corresponding correction amount of the thermal expansion from the clutch stroke St. The corresponding correction amount of the thermal expansion used in step A9 is calculated in step A6 and same as which used in step 7.

In step A10, the ECU 50 calculates the back-calculated first correction target clutch stroke rate with reference to the position information related to the fully engaged position and the standby position on the basis of the back-calculated first correction target clutch stroke calculated in step A9. The back-calculated first correction target clutch stroke rate is calculated by calculating back the first correction target clutch stroke rate on the basis of the position information (i.e. the updated values) related to the fully engaged position and the standby position. That is, the back-calculated first correction target clutch stroke rate is calculated by dividing the back-calculated first correction target clutch stroke by the difference between the fully engaged position and the standby position.

In step A11, the ECU 50 calculates the back-calculated first correction target clutch torque with reference to the characteristic map related to the target clutch torque and the target clutch stroke rate on the basis of the back-calculated first correction target clutch stroke rate calculated in step A10. The back-calculated first correction target clutch torque is calculated by calculating back the first correction target clutch torque corresponding to the back-calculated first correction target clutch stroke rate from the characteristic map related to the target clutch torque and the target clutch stroke rate. The characteristic map related to the target clutch torque and the target clutch stroke rate used in this step is same as which used in step A4.

In step A12, the ECU 50 calculates the back-calculated reference target clutch torque on the basis of the back-calculated first correction target clutch torque and the correction coefficient of the clutch torque temperature. The back-calculated reference target clutch torque is calculated by calculating back the reference target clutch torque on the basis of the back-calculated first correction target clutch torque and the correction coefficient of the clutch torque temperature. That is, the back-calculated reference target clutch torque is calculated by dividing the back-calculated first correction target clutch torque by the correction coefficient of the clutch torque temperature. The correction coefficient of the clutch torque temperature used in step A12 is same as which used in step A3.

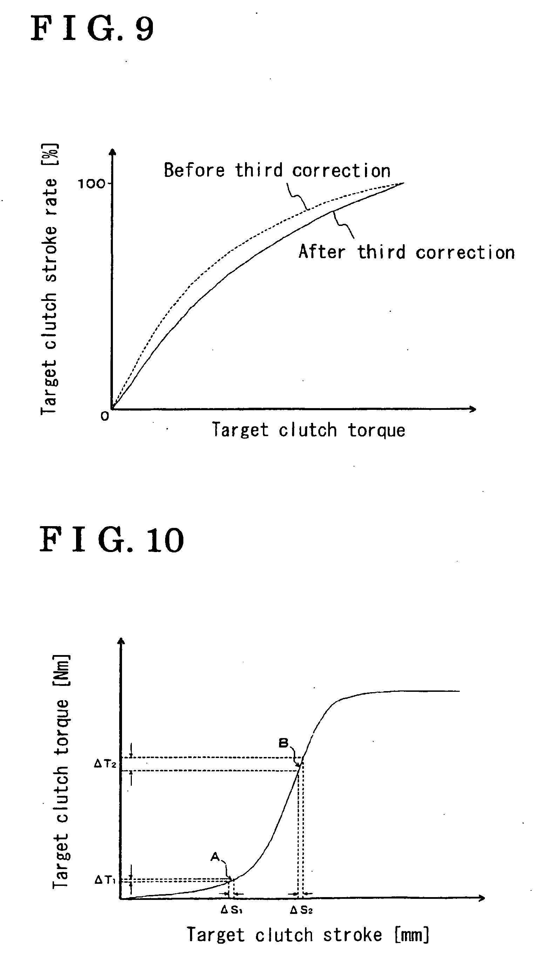

In step A13, the ECU 50 corrects the characteristic map related to the target clutch torque and the target clutch stroke rate on the basis of the back-calculated reference target clutch torque and the clutch estimate torque. This correction refers to as a multipoint correction or a third correction. The clutch estimate torque is calculated on the basis of the engine torque and the engine rotational speed. A characteristic map related to the corrected target clutch torque and the target clutch stroke rate would be used in step A4 and step A11 of next routine. An image of the target clutch torque and the target clutch stroke rate before and after the third correction is illustrated in Fig. 9. The operation is temporarily terminated after step A13.

The first embodiment of the present invention and known arts are compared with an example of the clutch torque in a condition where the clutch torque desirably be controlled at 20 Nm.

With the construction according to the clutch control device of the known art, optimal moving amount of the actual clutch stroke in the direction of the clutch engaged position from the first correction target clutch torque of 20Nm is calculated by using the characteristic map. For example, the first correction target clutch stroke is assumed to be 4.5mm. However, actual clutch disc is thickened by 0.5mm due to the thermal expansion. Therefore, the clutch stroke in practice becomes the same torque as which is controlled to be a sum of the first correction target clutch stroke and a thermal expansion thickness (4.5mm+0.5mm=5.0mm). An error of the clutch stroke in practice becomes 10Nm when the clutch torque is assumed to be 30Nm in a condition where the clutch stroke is 5.0mm.

With the construction of the clutch control device according to the first embodiment of the present invention, the clutch is desired to be engaged in a condition where the first correction target clutch torque being 20Nm and the first correction target clutch stroke being 4.5mm. The clutch control device calculates the corresponding correction amount of the thermal expansion due to the clutch temperature. If the corresponding correction amount of the thermal expansion is assumed to be -0.5mm, the clutch stroke in practice is the sum of the first correction target clutch stroke and the corresponding correction amount of the thermal expansion (4.5mm-0.5mm=4.0mm). In this case, the actual clutch torque is corresponded to the clutch stroke of 4.0mm+0.5mm=4.5mm. Accordingly, the clutch stroke obtains capability of 20Nm as intended.

According to the first embodiment, the target clutch torque (i.e., the target clutch stroke) is corrected on the basis of the estimated clutch temperature. The target clutch torque (i.e., the target clutch stroke) is corrected to absorb the influence due to the fluctuation of the friction coefficient *µ* and the thermal expansion of the clutch disc 21a on the basis of the estimated clutch temperature. Accordingly, the optimal clutch torque feed back operation can be performed by absorbing the influence on the clutch torque due to the clutch temperature on the basis of the corrected target clutch torque (i.e., the target clutch stroke). The clutch control device of the present invention performs the clutch temperature correction not only at low temperature, but also at any temperature including high temperature period. Further, the clutch control device calculates the clutch estimate temperature by using the clutch estimate torque calculated on the basis of the engine torque and the engine rotational speed so as to avoid divergence of the correction.

Although the present invention has been described in connection with particular embodiments thereof, it can be changed as follows.

According to a first embodiment, the clutch actuator 23 is provided for varying the clutch lever 22 by forward and rearward movement of the rod 25. For example, the clutch actuator, which operates the release bearing 27, the diaphragm spring 28, and the pressure plate 29, may be provided for controlling the clutch torque.

According to the first embodiment of the present invention, the clutch temperature is estimated in response to the vehicle driving conditions. For example, the clutch disc 21a may be provided with a temperature detecting sensor for detecting the clutch temperature directly.

According to the present invention, the optimal clutch torque feedback operation can be performed since the target clutch torque (i.e., the target clutch stroke) is corrected to absorb the influence due to the fluctuation of the friction coefficient µ and the thermal expansion of the clutch disc on the basis of the clutch temperature.

According to the present invention, the target clutch torque is calculated (back calculation) on the basis of the clutch stroke (i.e., the actual clutch stroke) detected by the detecting means so as to estimate an accurate clutch torque.

According to the present invention, the clutch stroke detected by the detecting means is not used as a parameter in the calculation of the clutch estimate temperature so as to avoid a circle consultation of the correction amount. Therefore, the improvement of stability of the estimate accuracy is achieved.

According to the present invention, the parameter is initialized by the predetermine timing so as to achieve the improvement of stability of the estimate accuracy and capability of the initial driving. The initial driving refers to as the driving in a little while after the ignition switch be turned on.

## Claims

1. A clutch control device for controlling a clutch torque, which is transmitted between a flywheel (10a) connected to an engine (10) and a clutch disc (21a) connected to a transmission (30), to achieve a target clutch torque on the basis of a control amount of an actuator (23), comprising:
a first detecting means (50, 51) for detecting a clutch disc temperature;
a first correcting means (50, 53) for correcting the control amount of the actuator (23) on the basis of a fluctuation of the friction coefficient in response to the clutch disc temperature detected by the first detecting means (50,51); and
a second correcting means (50, 53) for correcting the control amount of the actuator on the basis of a fluctuation of a thermal expansion in response to the clutch disc temperature,
wherein the control amount of the actuator (23) is a clutch stroke of the clutch control device, the clutch stroke is controlled to be corresponded with a target clutch stroke, the target clutch stroke is defined by a characteristic map related to the target clutch torque and the target clutch stroke,
the first correcting means (50, 53) calculates a correction coefficient of the clutch torque temperature on the basis of the clutch disc temperature detected by the first detecting means (50,51) and performs a first correction by multiplying a value of a characteristic map related to a reference clutch torque and the clutch stroke by the correction coefficient of the clutch torque temperature, and
the second correcting means (50,53) calculates a correction amount of the thermal expansion on the basis of the clutch disc temperature detected by the first detecting means and performs a second correction by adding the correction amount of the thermal expansion to a value of a characteristic map related to the clutch torque and the clutch stroke after the first correction, wherein the clutch control device further comprises
a second detecting means (26) for detecting the clutch stroke moved by an actuation of the actuator (23); **characterized by**
a first calculating means (50, 52) for calculating a back-calculated target clutch torque which is calculated back on the basis of the clutch stroke detected by the second detecting means, and in that
the first calculating means uses (50,52) the correction coefficient of the clutch torque temperature and the correction amount of the thermal expansion for calculating the back-calculated target clutch torque and corrects a characteristic map related to the reference clutch torque and the clutch stroke on the basis of the back-calculated target clutch torque.

2. The clutch control device according to claim 1, wherein:
the first calculating means (50, 52) calculates a back-calculated first correction target clutch stroke on the basis of the clutch stroke detected by the second detecting means and the thermal expansion, a back-calculated first correction target clutch stroke rate with reference to the position information related to the fully engaged position and the standby position on the basis of the back-calculated first correction target clutch stroke, a back-calculated first correction target clutch torque with reference to the characteristic map related to the target clutch torque and the target clutch stroke rate on the basis of the back-calculated first correction target clutch stroke rate, and a back-calculated reference target clutch torque on the basis of the back-calculated first correction target clutch torque and the correction coefficient of the clutch torque temperature.

3. The clutch control device according to claim 2, wherein:
the first calculating means (50, 52) corrects the characteristic map related to the target clutch torque and a target clutch stroke rate on the basis of the back-calculated reference target clutch torque and a clutch estimate torque on the basis of the engine torque and the engine rotational speed.

4. The clutch control device according to one of claims 1 to 3, further comprising:
a second calculating means (50, 52) for calculating a clutch estimate temperature estimated on the basis of a predetermined parameter, **characterized in that**
the second calculating means (50,52) calculates the clutch disc temperature by not using the clutch stroke detected by the second detecting means as the predetermined parameter.

5. The clutch control device according to claim 4, further comprising:
an initializing means (50) for initializing the predetermined parameter, used in the calculation of the second calculating means (50,52), every predetermine timing.

6. The clutch control device according to claims 1-5, wherein
a relationship between the clutch disc temperature and the friction coefficient in response to the clutch disc temperature is defined that the friction coefficient is held constant value until a predetermined temperature and the friction coefficient is decreased when the clutch temperature increases beyond the predetermined temperature.

7. The clutch control device according to claim 4, wherein
the second calculating means (50,52) calculates the clutch disc temperature using the parameter in response to an engine torque and an engine rotational speed.

8. The clutch control device according to claims 1-7, wherein
the clutch control device performs a feed back control of the clutch stroke on the basis of a value of a characteristic map related to the clutch torque and the clutch stroke after the second correction and transmits the target clutch torque between the flywheel (10a) and the clutch disc (21a).

9. The clutch control device according to claims 1-8, wherein
the actuator (23) includes a electric motor (24) serving as a driving power source.

## Patentansprüche

1. Kupplungssteuerungsvorrichtung zum Steuern eines Kupplungsdrehmoments, das zwischen einem mit einem Motor (10) verbundenen Schwungrad (10a) und einer mit einem Getriebe (30) verbundenen Kupplungsscheibe (21a) übertragen wird, zum Erreichen eines Sollkupplungsdrehmoments auf der Basis einer Steuerungsgröße eines Aktors (23), mit einem ersten Erfassungsmittel (50, 51) zum Erfassen einer Kupplungsscheibentemperatur, einem ersten Korrekturmittel (50, 53) zum Korrigieren der Steuerungsgröße des Aktors (23) auf der Basis einer Schwankung des Reibungskoeffizienten als Antwort auf die von dem ersten Erfassungsmittel (50, 51) erfasste Kupplungsscheibentemperatur, und
einem zweiten Korrekturmittel (50, 53) zum Korrigieren der Steuerungsgröße des Aktors auf der Basis einer Schwankung einer thermischen Ausdehnung als Antwort auf die Kupplungsscheibentemperatur, wobei die Steuerungsgröße des Aktors (23) ein Kupplungshub der Kupplungssteuerungsvorrichtung ist,
der Kupplungshub gesteuert wird, dass er einem Sollkupplungshub entspricht,
der Sollkupplungshub von einem sich auf das Sollkupplungsdrehmoment und den Sollkupplungshub beziehenden Kennfeld definiert ist,
das erste Korrekturmittel (50, 53) einen Korrekturkoeffizienten der Kupplungsdrehmomenttemperatur auf der Basis der von dem ersten Erfassungsmittel (50, 51) erfassten Kupplungsscheibentemperatur berechnet und eine erste Korrektur durch Multiplizieren eines Werts eines sich auf ein Bezugskupplungsdrehmoment und den Kupplungshub beziehenden Kennfelds mit dem Korrekturkoeffizienten der Kupplungsdrehmomenttemperatur durchführt, und
das zweite Korrekturmittel (50, 53) eine Korrekturgröße der thermischen Ausdehnung auf der Basis der von dem ersten Erfassungsmittel erfassten Kupplungsscheibentemperatur berechnet und eine zweite Korrektur durch Hinzufügen der Korrekturgröße der thermischen Ausdehnung zu einem Wert eines sich auf das Kupplungsdrehmoment und den Kupplungshub nach der ersten Korrektur beziehenden Kennfelds durchführt, wobei die Kupplungssteuerungsvorrichtung ferner umfasst:
ein zweites Erfassungsmittel (26) zum Erfassen des durch eine Betätigung des Aktors (23) bewegten Kupplungshubs, **gekennzeichnet durch**
ein erstes Berechnungsmittel (50, 52) zum Berechnen eines zurückgerechneten Sollkupplungsdrehmoments, das auf der Basis des von dem zweiten Erfassungsmittel erfassten Kupplungshubs berechnet wird, und **dadurch**, dass
das erste Berechnungsmittel (50, 52) den Korrekturkoeffizienten der Kupplungsdrehmomenttemperatur und die Korrekturgröße der thermischen Ausdehnung zum Berechnen des zurückgerechneten Sollkupplungsdrehmoments verwendet und ein sich auf das Bezugskupplungsdrehmoment und den Kupplungshub beziehendes Kennfeld auf der Basis des zurückgerechneten Sollkupplungsdrehmoments korrigiert.

2. Kupplungssteuerungsvorrichtung nach Anspruch 1, wobei
das erste Berechnungsmittel (50, 52) einen zurückgerechneten, ersten Korrektursollkupplungshub auf der Basis des von dem zweiten Erfassungsmittel erfassten Kupplungshubs und der thermischen Ausdehnung, eine zurückgerechnete, erste Korrektursollkupplungshubrate unter Bezug auf die Positionsinformation bezüglich der vollständig eingerückten Position und der Standbyposition auf der Basis des zurückgerechneten, ersten Korrektursollkupplungshubs, ein zurückgerechnetes, erstes Korrektursollkupplungsdrehmoment unter Bezug auf das sich auf das Sollkupplungsdrehmoment und die Sollkupplungshubrate beziehende Kennfeld auf der Basis der zurückgerechneten, ersten Korrektursollkupplungshubrate, und ein zurückgerechnetes Bezugssollkupplungsdrehmoment auf der Basis des zurückgerechneten, ersten Korrektursollkupplungsdrehmoments und des Korrekturkoeffizienten der Kupplungsdrehmomenttemperatur berechnet.

3. Kupplungssteuerungsvorrichtung nach Anspruch 2, wobei
das erste Berechnungsmittel (50, 52) das sich auf das Sollkupplungsmoment und eine Sollkupplungshubrate beziehende Kennfeld auf der Basis des zurückgerechneten Bezugssollkupplungsdrehmoments und eines Kupplungsschätzdrehmoments auf der Basis des Motordrehmoments und der Motordrehzahl korrigiert.

4. Kupplungssteuerungsvorrichtung nach einem der Ansprüche 1 bis 3, mit ferner einem zweiten Berechnungsmittel (50, 52) zum Berechnen einer auf der Basis eines vorbestimmten Parameters geschätzten Kupplungsschätztemperatur, **dadurch gekennzeichnet, dass** das zweite Berechnungsmittel (50, 52) die Kupplungsscheibentemperatur durch nicht Verwenden des von dem zweiten Erfassungsmittel erfassten Kupplungshubs als den vorbestimmten Parameter berechnet.

5. Kupplungssteuerungsvorrichtung nach Anspruch 4, mit ferner
einem Initiierungsmittel (50) zum Initiieren des vorbestimmten Parameters, der bei der Berechnung des zweiten Berechnungsmittels (50, 52) verwendet wird, zu jedem vorbestimmten Zeitpunkt.

6. Kupplungssteuerungsvorrichtung nach einem der Ansprüche 1-5, wobei
eine Beziehung zwischen der Kupplungsscheibentemperatur und dem Reibungskoeffizienten als Antwort auf die Kupplungsscheibentemperatur definiert wird, dass der Reibungskoeffizient als ein konstanter Wert bis zu einer vorbestimmten Temperatur gehalten wird und der Reibungskoeffizient gesenkt wird, wenn die Kupplungstemperatur die vorbestimmte Temperatur übersteigt.

7. Kupplungssteuerungsvorrichtung nach Anspruch 4, wobei
das zweite Berechnungsmittel (50, 52) die Kupplungsscheibentemperatur unter Verwendung des Parameters als Antwort auf ein Motordrehmoment und eine Motordrehzahl berechnet.

8. Kupplungssteuerungsvorrichtung nach einem der Ansprüche 1-7, wobei
die Kupplungssteuerungsvorrichtung eine Steuerung des Kupplungshubs auf der Basis eines Werts eines sich auf das Kupplungsdrehmoment und den Kupplungshub nach der zweiten Korrektur beziehenden Kennfelds durchführt und das Sollkupplungsdrehmoment zwischen dem Schwungrad (10a) und der Kupplungsscheibe (21 a) überträgt.

9. Kupplungssteuerungsvorrichtung nach einem der Ansprüche 1-8, wobei
der Aktor (23) einen Elektromotor (24) aufweist, der als eine Antriebskraftquelle dient.

## Revendications

1. Dispositif de commande d'embrayage pour commander un couple d'embrayage qui est transmis entre un volant (10a) raccordé à un moteur (10) et un disque d'embrayage (21a) raccordé à une transmission (30), pour obtenir un couple d'embrayage cible sur la base d'une quantité de commande d'un dispositif d'actionnement (23) comprenant :
un premier moyen de détection (50, 51) pour détecter une température du disque d'embrayage ;
un premier moyen de correction (50, 53) pour corriger la quantité de commande du dispositif d'actionnement (23) sur la base d'une fluctuation du coefficient de frottement en réponse à la température du disque d'embrayage détectée par le premier moyen de détection (50, 51) ; et
un second moyen de correction (50, 53) pour corriger la quantité de commande du dispositif d'actionnement sur la base d'une fluctuation d'une expansion thermique en réponse à la température du disque d'embrayage,
dans lequel la quantité de commande du dispositif d'actionnement (23) est une course d'embrayage du dispositif de commande d'embrayage, la course d'embrayage est commandée pour correspondre à une course d'embrayage cible, la course d'embrayage cible étant définie par une carte caractéristique ayant trait au couple d'embrayage cible et à la course d'embrayage cible,
le premier moyen de correction (50, 53) calcule un coefficient de correction de la température du couple d'embrayage sur la base de la température du disque d'embrayage détectée par le premier moyen de détection (50, 51) et effectue une première correction en multipliant une valeur d'une carte caractéristique ayant trait à un couple d'embrayage de référence et à la course d'embrayage par le coefficient de correction de la température du couple d'embrayage, et
le second moyen de correction (50, 53) calcule une quantité de correction de l'expansion thermique sur la base de la température du disque d'embrayage détectée par le premier moyen de détection et effectue une deuxième correction en ajoutant la quantité de correction de l'expansion thermique à une valeur d'une carte caractéristique ayant trait au couple d'embrayage et à la course d'embrayage après la première correction, dans lequel le dispositif de commande d'embrayage comprend en outre :
un second moyen de détection (26) pour détecter la course d'embrayage effectuée par actionnement du dispositif d'actionnement (23) ; **caractérisé par** :
un premier moyen de calcul (50, 52) pour calculer un couple d'embrayage cible rétrocalculé sur la base de la course d'embrayage détectée par le second moyen de détection, et en ce que
le premier moyen de calcul (50, 52) utilise le coefficient de correction de la température du couple d'embrayage et la quantité de correction de l'expansion thermique pour calculer le couple d'embrayage cible rétrocalculé et corrige un carte caractéristique ayant trait au couple d'embrayage de référence et à la course d'embrayage sur la base du couple d'embrayage cible rétrocalculé.

2. Dispositif de commande d'embrayage selon la revendication 1, dans lequel :
le premier moyen de calcul (50, 52) calcule une course d'embrayage cible rétrocalculée de première correction sur la base de la course d'embrayage détectée par le second moyen de détection et de l'expansion thermique, une première vitesse de course d'embrayage cible de correction rétrocalculée en référence aux informations de position ayant trait à la position complètement engagée et à la position de veille sur la base de la course d'embrayage cible rétrocalculée de première correction, un couple d'embrayage cible rétrocalculé de première correction en référence à la carte caractéristique ayant trait au couple d'embrayage cible et à la vitesse de la course d'embrayage cible sur la base de la vitesse de course d'embrayage cible rétrocalculée de première correction, et un couple d'embrayage cible de référence rétrocalculé sur la base du couple d'embrayage cible rétrocalculé de première correction et du coefficient de correction de la température du couple d'embrayage.

3. Dispositif de commande d'embrayage selon la revendication 2, dans lequel :
le premier moyen de calcul (50, 52) corrige la carte caractéristique ayant trait au couple d'embrayage cible et à une vitesse de course d'embrayage cible sur la base du couple d'embrayage cible de référence rétrocalculé et d'un couple d'embrayage estimé sur la base du couple du moteur et de la vitesse de rotation du moteur.

4. Dispositif de commande d'embrayage selon l'une quelconque des revendications 1 à 3, comprenant en outre :
un second moyen de calcul (50, 52) pour calculer une température d'embrayage estimée sur la base d'un paramètre prédéterminé, **caractérisé en ce que** :
le second moyen de calcul calcule la température du disque d'embrayage en n'utilisant pas la course d'embrayage détectée par le second moyen de détection en tant que paramètre prédéterminé.

5. Dispositif de commande d'embrayage selon la revendication 4, comprenant en outre :
un moyen d'initialisation (50) pour initialiser le paramètre prédéterminé utilisé dans le calcul du second moyen de calcul (50, 52) à chaque synchronisation prédéterminée.

6. Dispositif de commande d'embrayage selon les revendications 1 à 5, dans lequel :
une relation entre la température du disque d'embrayage et le coefficient de frottement en réponse à la température du disque d'embrayage est définie en ce que le coefficient de frottement est maintenu à une valeur constante jusqu'à une température prédéterminée et le coefficient de frottement est réduit lorsque la température du disque d'embrayage augmente au-delà de la température prédéterminée.

7. Dispositif de commande d'embrayage selon la revendication 4, dans lequel :
le second moyen de calcul (50, 52) calcule la température du disque d'embrayage en utilisant le paramètre en réponse à un couple du moteur et à une vitesse de rotation du moteur.

8. Dispositif de commande d'embrayage selon les revendications 1 à 7, dans lequel :
le dispositif de commande d'embrayage effectue une commande de rétroaction de la course d'embrayage sur la base d'une valeur d'une carte caractéristique ayant trait au couple d'embrayage et à la course d'embrayage après la deuxième correction et transmet le couple d'embrayage cible entre le volant (10a) et le disque d'embrayage (21a).

9. Dispositif de commande d'embrayage selon les revendications 1 à 8, dans lequel :
le dispositif d'actionnement (23) comprend un moteur électrique (24) servant de source d'alimentation d'entraînement.
